# EUROPÄISCHE PATENTSCHRIFT

(11) **EP 1 386 896 B1**
(45) Veröffentlichungstag und Bekanntmachung des Hinweises auf die Patenterteilung: **04.04.2007**
(21) Anmeldenummer: 03015699.6
(22) Anmeldetag: 21.07.2003
(51) Int. Cl.: C04B 35/83, C04B 38/00, C04B 41/88, C04B 35/573, F16D 69/02

(54) **Verfahren zur Herstellung von Hohlkörpern aus faserverstärkten keramischen Materialien**
Method of production of hollow bodies out of fibre reinforced ceramic materials
Procédé de fabrication des corps creux de matériaux céramiques à renfort de fibres

(30) Priorität: 29.07.2002 DE 10234400
(43) Veröffentlichungstag der Anmeldung: 04.02.2004
(73) Patentinhaber: AUDI AG, 85045 Ingolstadt (DE)
(72) Erfinder: Sommer, Arno, 86399 Bobingen (DE); Huber, Dieter, 86154 Augsburg (DE); Straub, Dunja, 86609 Donauwörth (DE); Shafi, Vahid, Dr., 86405 Meitingen (DE)
(74) Vertreter: Deckers, Hellmuth Alexander

(56) Entgegenhaltungen:
- EP-B- 0 717 214
- WO-A-96/13470
- DE-C- 10 148 658
- DE-C- 10 148 659

## Beschreibung

Die vorliegende Erfindung bezieht sich auf ein Verfahren zur Herstellung von Hohlkörpern aus faserverstärkten keramischen Materialien. Insbesondere betrifft die Erfindung ein Verfahren zur endkonturnahen Herstellung eines porösen faserverstärkten Kohlenstoff-haltigen Formkörpers mit Ausnehmungen oder Hohlräumen, insbesondere eines faserverstärkten C/C-Körpers (mit Kohlenstoffasern verstärkter Kohlenstoff, englisch "CFC" oder "CFRC", carbon fibre reinforced carbon), der aus binderhaltigen Faserstoffmassen mittels eines Preßvorganges unter Verwendung von Preßkernen geformt und in einer nachfolgenden thermischen Behandlung zu C/C umgesetzt wird, sowie gegebenenfalls die Nachverdichtung dieses porösen faserverstärkten Kohlenstoff-haltigen Formkörpers unter Ausbildung einer keramischen Matrix, insbesondere durch eine Flüssigmetall-Infiltration in den C/C-Körper, gegebenenfalls mit anschließender Wärmebehandlung, wobei die Matrix dann Metalle und die durch Reaktion mit dem Kohlenstoff gebildeten Metallcarbide sowie gegebenenfalls Reste von nicht umgesetztem Kohlenstoff enthält.

Unter "Metallen" werden hier alle Elemente verstanden, die Carbide bilden, die bei Raumtemperatur fest sind, also auch insbesondere Silicium.

Das erfindungsgemäße Verfahren betrifft insbesondere die Herstellung von mit Kohlenstoffasern verstärkten keramischen Verbundwerkstoffen mit Ausnehmungen und Hohlräumen, welche über die Flüssigmetallinfiltration mit Siliciumschmelzen unter Reaktion zumindest eines Teils des Kohlenstoffs zu Siliciumcarbid in mit Kohlenstoffasern verstärkte Verbundwerkstoffe mit SiC-haltiger oder Kohlenstoff- und SiC-haltiger Matrix (C/SiC- oder C/C-SiC-Werkstoffe) umgesetzt werden. Anwendung finden diese Verbundwerkstoffe insbesondere bei Brems-, Kupplungs- und Reibscheiben, sowie als hochtemperaturbeständige Konstruktionswerkstoffe.

Heutzutage überwiegend verwendete Materialien für Bremsscheiben im Automobilbau sind Stahl oder Grauguß, und in der Luftfahrt mit Kohlenstoffasern verstärkte Kohlenstoff-Werkstoffe (C/C). Die von den Scheibenmaterialien geforderten Eigenschaften sind dabei hohe mechanische Stabilität, Temperaturbeständigkeit, Härte und Verschleißfestigkeit gegenüber dem Reibpartner in der Reibpaarung der Bremse. Die Einsatztemperatur bisher verwendeter Graugußbremsscheiben ist dabei durch den Schmelzpunkt des Materials limitiert. Die mechanische Versagenstemperatur liegt, abhängig von der Belastung, bereits deutlich unterhalb des Schmelzpunktes. Weiterhin tritt durch Umwandlung des metallischen Gefüges beim Erhitzen die Gefahr einer Rißbildung in den Scheiben auf. Die Verwendung von faserverstärkter Keramik als Werkstoff für Bremsscheibenanwendungen erweist sich als Lösung für diese Problematik. Insbesondere Werkstoffe auf der Basis von mit Kohlenstoffasern verstärktem Siliciumcarbid (C/SiC) haben sich für diese Anwendung als geeignet erwiesen. Die Vorteile dieses Materials sind die niedrigere Dichte (damit niedrigeres Gewicht bei gleichem Volumen), die hohe Härte und Temperaturbeständigkeit bis ca. 1400 °C und nicht zuletzt die extrem hohe Verschleißbeständigkeit. Das deutlich geringere Gewicht von Bremsscheiben aus diesen C/SiC-Werkstoffen erweist sich als positiver Einflußfaktor zur Verbesserung des Komforts und der Sicherheit durch die Reduktion der ungefederten Massen bei Kraftfahrzeugen und als wirtschaftlicher Faktor im Bereich der Luftfahrt. Die große Härte und Verschleißbeständigkeit von C/SiC-Bauteilen ermöglicht hier weit höhere Standzeiten im Vergleich zu bisher üblichen Materialien auf C/C-Basis oder Metallbasis.

Verfahren zur Herstellung von C/SiC-Bauteilen sind beispielsweise aus der Patentanmeldung DE-A 197 10 105 bekannt und umfassen unter anderem die folgenden Schritte :
- Herstellen einer preßfähigen Mischung aus Kohlenstoff-haltigen Fasern oder Faserbündeln (gemeinsam nachfolgend als "Faserstoff" bezeichnet), die mit einer Beschichtung überzogen sein können, einerseits und Füllmitteln und/oder Bindemitteln wie beispielsweise Harzen und/oder Pech andererseits,
- Formgebung der Mischung unter Druck und Temperatur und Carbonisierung der Kohlenstoff-haltigen Füll- und Bindemittel zur Herstellung eines Formkörpers, insbesondere eines aus mit Kohlenstoffasern verstärktem Kohlenstoff bestehenden Formkörpers (C/C) und gegebenenfalls Graphitierung
- Infiltrieren zumindest einer Randschicht des Formkörpers mit einer Silicium-Schmelze und zumindest partielle Reaktion des Siliciums mit dem Kohlenstoff im Formkörper zu SiC, wobei sich ein Formkörper bildet, der wenigstens in der Randschicht aus einer Verbundkeramik mit in einer Matrix aus überwiegend SiC, Si und C eingebetteten, Kohlenstoff haltigen Fasern besteht (hier ebenfalls als C/SiC bezeichnet).

Im folgenden soll unter C/SiC allgemein auch die Werkstoffvariante verstanden werden, bei der wie oben beschrieben nur eine Randschicht siliciert wird.

Zu den üblichen Herstellungsverfahren gehören auch diejenigen, bei denen der C/C-Körper über die Flüssig- oder Gas-Phase mit Kohlenstoff-Vorläufern ("carbon precursors", Substanzen, die beim Erhitzen unter Ausschluß von oxydierenden Medien Kohlenstoff bilden) oder mit Kohlenstoff nachverdichtet wird, oder die Matrix aus überwiegend SiC, Si und C durch eine Gasphaseninfiltration (CVD, Chemical Vapour Deposition, oder CVI, Chemical Vapour Infiltration) oder durch die Pyrolyse von Si-haltigen präkeramischen Polymeren erzeugt wird.

Heutige metallische Bremsscheiben besitzen häufig von Luft durchströmte Lüftungsschlitze oder -kanäle innerhalb der Scheibe, um das Temperaturniveau der Scheibe zu reduzieren und den Verschleiß der Reibbeläge bei hoher Belastung zu senken. Derartige Lüftungskanäle werden auch bei Bremsscheiben auf C/SiC-Basis ausgebildet, besonders um das Temperaturniveau mit Rücksicht auf die Bremsbeläge und weitere Systemkomponenten zu senken.

Ein Verfahren zur Herstellung von Reibeinheiten aus C/C-SiC-Werkstoff mit Lüftungskanälen, Hohlräumen und Ausnehmungen, bei dem ein endkonturnah strukturierter poröser Kohlenstoffkörper mit flüssigem Silicium infiltriert wird, ist aus der EP-B 0 788 468 bekannt. Dieses Verfahren nutzt den Umstand, daß sich die Siliciumflüssiginfiltration und Ausbildung der Si- und SiC-reichen Verbundwerkstoff-Matrix nahezu ohne Geometrieänderung des C/C-Vorkörpers vollzieht, so daß die Hohlräume und Ausnehmungen bereits im relativ weichen und gut zu bearbeitenden C/C-Vorkörper angelegt werden können und nicht erst in der sehr harten C/C-SiC-Verbundkeramik. Unter anderem wird vorgeschlagen, die Hohlräume und Ausnehmungen durch lösliche Kerne aus Schaumpolystyrol oder andere Hartschäume, durch pyrolysierbare Kerne aus Polyvinylalkohol, oder durch Kerne aus Gummi, Holz, Metall oder Keramik zu bilden. Das Material der Kerne bildet die Lüftungskanäle der Reibeinheit ab, wobei die Stege zwischen den einzelnen Lüftungskanälen durch entsprechende Aussparungen innerhalb des Kernmaterials vorgegebenen werden.

Die bei der Herstellung kurzfaserverstärkter Keramiken eingesetzten faserstoffhaltigen Preßmassen lassen sich im allgemeinen nur als relativ lockeres Haufwerk in die Preßform füllen. Daher sind zur Herstellung von Grünlingen geeigneter Rohdichte hohe Verdichtungsverhältnisse der preßfähigen Masse beziehungsweise hohe Verfahrwege der Preßstempel notwendig. In der scheibenförmigen Zone innerhalb der Preßmasse, in der sich die Kerne befinden (nachfolgend als "Kernzone" bezeichnet) beziehungsweise in den Aussparungen zwischen den Kernen kann die Preßmasse diese Aussparungen nur unvollkommen füllen, da die Preßmasse durch die die Aussparungen begrenzenden Kerne am Fließen gehindert wird. Daher ist das Verdichtungsverhältnis in der Kernzone, nämlich in den Aussparungen und Zwischenräumen zwischen benachbarten Kernen stets geringer als in den über und unter der Kernzone liegenden Materialschichten. Der Fasergehalt in diesen Bereichen ist durch die geringere Verdichtung geringer als im restlichen Material. Dies kann einen besonders schädlichen Einfluß auf die mechanischen Eigenschaften der faserverstärkten Keramik ausüben.

Als Kurzfasern werden hier Fasern mit einer mittleren Länge von höchstens 50 mm bezeichnet.

Als Faserbündel werden hier Gruppen von Einzelfasem bezeichnet, die parallel orientiert sind und zumindest annähernd die gleiche Länge haben.

Abhilfe kann unter anderem dadurch geschaffen werden, daß die Preßmasse in den Aussparungen zwischen den Kernen durch geeignete Preßstempel vorverdichtet wird. Diese Vorgehensweise weist aber einige Nachteile auf. So ist sie verfahrenstechnisch aufwendig, da unter anderem zum normalen Preßverfahren die zusätzlichen Verfahrensschritte der Befüllung der Kern-Zwischenräume mit der Preßmasse und deren Vorverdichtung hinzukommen. Geeignete Preßwerkzeuge müßten Preßstempel in mehreren Ebenen aufweisen, von denen diejenigen im Bereich der Ausnehmungen der Kerne gegenüber dem Rest des Preßwerkzeuges separat verfahren werden können. Des weiteren kann sich eine Grenzschicht oder Material- und Gefügephasengrenze zwischen den vorverdichteten Bereichen in der Kernzone einerseits und den darüber oder darunterliegenden Schichten andererseits ausbilden. Dies ist insbesondere für die mechanischen Eigenschaften des hierdurch erhältlichen keramischen Verbundwerkstoffs schädlich.

Aufgabe der Erfindung ist es daher, ein Verfahren bereitzustellen und ein daran angepaßtes Kernmaterial zu entwickeln, durch welche faserverstärkte keramische Hohlkörper erhältlich sind, welche in der Kernzone (genauer in der von Preßmasse erfüllten Aussparungen zwischen den Kernen) keine geringere Faserstoffdichte aufweisen als in den darüber oder darunterliegenden Schichten, und die keine Phasengrenze am Übergang zwischen dem Material der Kernzone und dem Material der darüber oder darunterliegenden Schichten aufweisen. Die Kerne sollen weiter dergestalt sein, daß sie in einfacher Weise schonend aus dem Hohlkörper entfernbar sind.

Die Aufgabe wird erfindungsgemäß dadurch gelöst, daß für ein Preßverfahren mit einem die gesamte Fläche des Preßlings erfassenden Preßstempel kompressible Kerne bereitgestellt werden, die zumindest in der Richtung der Verfahrwege der Preßstempel beim Preßvorgang eine Längenänderung von mindestens 5 % erfahren, wobei die Kerne aus einem Material bestehen, das bei der weiteren thermischen Behandlung des faserhaltigen Vorkörpers entweder vollständig pyrolysiert werden, oder unter Volumenschwindung zumindest teilweise zersetzt werden.

Die Erfindung betrifft daher ein Verfahren zur Herstellung von Hohlkörpern aus faserverstärkten keramischen Materialien, wobei
- im ersten Schritt kompressible Kerne hergestellt werden, deren Form zumindest in der Ebene senkrecht zur Preßrichtung im wesentlichen der Geometrie der zu bildenden Hohlräume entspricht,
- im zweiten Schritt ein Grünkörper hergestellt wird, indem in eine Form die genannten kompressiblen Kerne und eine preßfähige Bindemittel und Faserstoff enthaltende Masse gefüllt werden,
- im dritten Schritt die faserstoffhaltige Masse verpreßt wird, wobei der Kern zumindest in Preßrichtung um mindestens 5 %, bezogen auf seine Ausgangslänge, komprimiert wird,
- im vierten Schritt die faserstoffhaltige Masse ausgehärtet wird, bevorzugt durch Erwärmen auf eine Temperatur von 120 °C bis 280 °C, wobei der dritte und vierte Schritt auch gleichzeitig oder zeitlich teilweise überlappend ausgeführt werden können,
- im fünften Schritt der auch als Vorkörper bezeichnete verfestigte Grünkörper durch Erhitzen in einer nicht oxydierenden Atmosphäre auf eine Temperatur von ca. 750 °C bis ca. 1100 °C zu einem C/C-Körper carbonisiert wird, und gegebenenfalls
- im sechsten Schritt der C/C-Körper unter Erhalt seiner Form mit einem flüssigen Metall infiltriert wird, wobei zumindest teilweise eine Reaktion des Kohlenstoff-Anteils der Matrix des C/C-Körpers mit dem Metall unter Bildung von Carbiden abläuft,
wobei die Kompressibilität der Kerne unter den Preßbedingungen eine Längenänderung in Preßrichtung um mindestens 5 % zuläßt, und die Kerne aus Material bestehen, das im fünften Schritt pyrolysiert, oder unter Volumenschwindung zumindest teilweise pyrolysiert wird.

Dabei wird eine Masse als "preßfähig" bezeichnet, wenn sie nach Verdichten im Preßvorgang nach dem Entspannen ihre Form behält und nicht ohne weiteres zerbröselt.

Die gemäß diesem Verfahren hergestellten faserverstärkten keramischen Hohlkörper zeichnen sich dadurch aus, daß sie im Bereich der Kernzone eine Faserstoffdichte innerhalb des Materials aufweisen, die nicht geringer als die in den Schichten darüber und darunter ist, die durch die Höhe des kompressiblen Kerns eingestellt werden kann und daß keine Phasengrenzen am Übergang zwischen der Kernzone und den angrenzenden Werkstoffschichten zu erkennen sind.

Erfindungsgemäß wird dies dadurch erreicht, daß in diesem Verfahren kompressible Kerne eingesetzt werden, die beim Preßvorgang zumindest in Preßrichtung zusammengedrückt oder komprimiert werden. Die Längenänderung ist durch Material, Höhe und Art des verlorenen Kernes gezielt einstellbar. Gegenüber einem Verfahren mit starren Kernen wird so ein größeres Preßform-Füllvolumen zur Verfügung gestellt. Während des Preßvorgangs wird der kompressible Kern bis auf eine zuvor bestimmbare Länge zusammengefahren, dadurch ist in den Aussparungen zwischen den Kernen das Verdichtungsverhältnis der preßfähigen Masse einstellbar.

Bevorzugt sind solche Kerne, die sich während des Pressens um mindestens 5 % bezogen auf deren Ausgangslänge zusammenpressen bzw. komprimieren lassen. Die Rückfederkraft des Materials ist dabei bevorzugt so gering, daß der ausgehärtete Grünling beim Entspannen nicht geschädigt werden kann. Aus diesem Grund sind beispielsweise Elastomere oder Gummi als Kernmaterial nicht geeignet.

Die lineare Kompressibilität der erfindungsgemäßen Kerne, also die relative Längenänderung in Richtung des Verfahrweges des Preßstempels, liegt bei mindestens 5 % der Ausgangslänge. Bevorzugt werden die Kerne auf 2 bis 80 % und besonders bevorzugt auf 5 bis 25 % ihrer Ausgangslänge in Preßrichtung komprimiert.

Dabei wird die Festigkeit der Kerne so gewählt, daß ein Preßdruck im Bereich von 0,1 bis 50 MPa zum Erreichen der gewünschten Kompression oder Stauchung ausreicht.

Im allgemeinen werden solche Kern-Materialien bevorzugt eingesetzt, deren Schmelztemperatur über der Härtungstemperatur des Grünkörpers liegt.

Gemäß einer Ausführungsform der Erfindung werden die Kerne aus schmelzbaren Materialien hergestellt, die aus thermoplastischen und rückstandsfrei pyrolysierbaren Polymeren (Kunststoffen) ausgewählt sind, im weiteren auch Thermoplastkerne genannt. Erfindungsgemäß wird das thermoplastische Material für den Kern so gewählt, daß dessen Schmelzpunkt oberhalb der Härtungstemperatur des Formgebungsverfahrens für den Grünkörper, typischerweise im Bereich von 120 bis 300 °C, aber deutlich unterhalb der Carbonisierungstemperatur der gepreßten und ausgehärteten Grünkörper liegt. Üblicherweise liegt der Schmelzpunkt bei mindestens 150 °C, bevorzugt bei mindestens 180 °C und besonders bevorzugt zwischen 220 °C und 280 °C. Erfolgt die thermische Aushärtung der preßfähigen Mischung aber erst nach dem Zusammenfahren der Presse auf das Endmaß, so können auch solche Kernmaterialien eingesetzt werden, die bei oder unterhalb der Härtungstemperatur schmelzen oder auch zersetzt werden, da die preßfähige Masse dann bereits ihre Endkontur angenommen hat. Werden als Binder für die preßfähigen Mischungen Phenolharze gewählt, so liegt der Schmelzpunkt des Thermoplasten beispielsweise bevorzugt über 150 °C. Für die bevorzugte Preßformgebung und Heiß-Härtung der Binder werden an den Thermoplastkern hohe Anforderungen an die Wärmeformbeständigkeit gestellt. Die Wärmeformbeständigkeitstemperatur (bestimmt gemäß ISO 75A) liegt üblicherweise oberhalb von 80 °C, besonders bevorzugt bei mindestens 150 °C. Die Härte (Kugeldruckhärte) des Thermoplasten sollte mindestens 30 MPa betragen.

Werden als Material für die Kerne thermoplastische Kunststoffe eingesetzt, so erfolgt die Herstellung der Kerne bevorzugt über ein Spritzgußverfahren. Allgemein eignen sich die bekannten Formungsverfahren, wie Kalt- oder Heiß-Pressen, Guß, Druckguß oder spanende Bearbeitung, je nach eingesetztem Material.

Vorteilhafte Materialien für kompressible Preßkerne sind geschäumte Polymere. Hierbei sind thermoplastische Polymere bevorzugt, insbesondere diejenigen, welche sich rückstandsfrei pyrolysieren lassen. Besonders geeignete Polymere sind Polyamide (PA) wie PA 66, Polyimide (PI) wie Polyätherimid (PEI), Polymethylmethacrylimid (PMMI) oder modifiziertes Polymethacrylimid (PMI), Polyoxymethylen (POM) und Polyterephthalate (PETP, PBTP) sowie deren Copolymere. Besonders geeignete Polymerschäume sind PMI-Schaum und geschäumtes Polystyrol.

Neben den rückstandsfrei bei Temperaturen von mindestens 750 °C pyrolysierenden Polymeren sind auch diejenigen geeignet, die nur teilweise pyrolysiert oder carbonisiert werden, sofern hierbei eine wesentliche (mindestens 50 %) Volumenschwindung stattfindet. Zu diesen Polymeren gehören unter anderem Duroplaste, wie Phenolharze beziehungsweise aus diesen gebildete Hartschäume. Es ist auch möglich, Mischungen von Materialien für die Kerne zu verwenden, von denen ein Teil rückstandsfrei pyrolysiert, und ein anderer Teil bei der Pyrolyse seine ursprüngliche Form soweit verliert, daß er in Form eines losen Pulvers oder unzusammenhängender Körner vorliegt.

Ebenso ist es aber auch möglich, ein locker gebundenes Haufwerk aus Polymerkugeln zu verwenden.

In einer weiteren vorteilhaften Variante der Erfindung werden mehrschichtige Kerne aus geschäumten Polymeren in sandwichartigen Strukturen eingesetzt. Dabei ist vorgesehen, daß mindestens eine der oberen oder unteren Flächen des Kernes durch ein hartes, unter Härtungsbedingungen unschmelzbares, insbesondere ein carbonisierbares Polymer bedeckt wird. Besonders bevorzugt ist sowohl die obere wie die untere Fläche des Kernes durch eine solche Schicht bedeckt. Dadurch wird erreicht, daß die Preßmasse nicht großflächig im direkten Kontakt mit dem relativ weichen komprimierbaren Material aus Polymerschaum steht und nicht durch Ungleichmäßigkeiten der unverdichteten Preßmasse zu einer ungleichmäßigen Verpressung des Kernmaterials führt. Dies hätte eine wellige rauhe und unebene Oberfläche des hier später gebildeten Hohlraums zur Folge. Durch das festere Material auf den Oberflächen des weichen Kerns wird der Preßdruck gleichmäßig in den kompressiblen Bereich des Kernes getragen, so daß glatte und ebene Grenzflächen im Grünkörper entstehen. Das Material, das die weichen Kerne bedeckt, wird bevorzugt bei Temperaturen von mindestens 250 °C unter Volumenabnahme zumindest zum Teil zersetzt.

In einer weiteren Variante wird das harte Material bei der "Sandwichbauweise" an der oberen und/oder unteren begrenzenden Fläche des Kerns durch einen Holzwerkstoff gebildet; beispielsweise aus Preßholz oder Spanplatten.

Eine weitere vorteilhafte Variante sieht mehrteilige Kerne vor, deren einzelne Teile unter Druckeinwirkung gegeneinander verfahrbar sind. In einer solchen Ausführungsform besteht der Kern aus zwei Halbkernen oder Halbschalen, von denen der erste Aussparungen im inneren Bereich enthält, welche den zweiten Halbkern aufnehmen können. Die zwei Halbkerne werden zunächst durch Verklebung oder durch eine Clip-Verbindung zusammengehalten und können so in die Preßform eingebracht werden. Erst nach Anlegen des Preßdrucks reißt die Klebung oder die Clip-Verbindung, wodurch der zweite Halbkern in den ersten geschoben werden kann. Der erste Kern bildet dabei die Führung des zweiten. Der Verfahrweg des zweiten Kerns kann durch Vorsprünge in der Aussparung des ersten Kernes oder durch die Tiefe der Aussparung selbst exakt eingestellt werden.

Das erfindungsgemäße Verfahren sieht vor, daß im zweiten Schritt preßfähige Massen aus Kohlenstoffasern, thermisch aushärtbaren Bindern, und - insbesondere Kohlenstoff-haltigen - Zuschlagstoffen gemeinsam mit den oben beschriebenen Kernen in die Preßform gefüllt werden. Dabei wird die Geometrie des gebildeten Körpers festgelegt.

Bevorzugt werden die Kohlenstoffaserschichten des C/C-Vorkörpers in der Nähe des Kerns in vorgegebener Vorzugsrichtung der Kohlenstoff-Verstärkungsfasern auf den Kern aufgebaut. Hierfür werden bevorzugt solche preßfähigen Massen verwendet, die Kohlenstoffasern mit einer mittleren Länge von mindestens 5 mm enthalten. Besonders bevorzugt sind preßfähige Massen, die Kohlenstoffasern in Form von Kurzfaserbündeln mit einer mittleren Länge von höchstens 50 mm enthalten, und wobei die Fasern eine Beschichtung aus pyrolytischem Kohlenstoff aufweisen, der durch Carbonisieren von Polymeren, Harzen oder Pechen gebildet ist. Bevorzugt wird dann die preßfähige Masse so in die Form gefüllt, daß die Kohlenstoffasern überwiegend parallel zur Richtung der höchsten Zugbeanspruchung des resultierenden Formteils orientiert sind. Überwiegend bedeutet in diesem Zusammenhang mindestens 50 %. Es ist auch möglich, die Kerne mit parallel gelegten und gebunden Kohlenstoffäden (englisch "tapes" oder "UDT" = unidirectional tapes genannt) zu umwickeln, und diese Hülle gegebenenfalls mit thermisch aushärtbaren Bindern zu fixieren. Auf diese Schicht vorzugsorientierter Kohlenstoffasern oder Fäden werden dann üblicherweise weitere preßfähige Massen mit geringerer Faser-, oder Faserbündellänge geschichtet.

In einer anderen bevorzugten Ausführungsform werden Kohlenstoffasern in Form von beschichteten Kurzfaserbündeln eingesetzt. Besonders bevorzugt sind hierbei mit graphitiertem Kohlenstoff beschichtete Fasern, beziehungsweise Faserbündel mit mittleren Längen unterhalb von 5 mm.

Als thermisch aushärtbare Binder werden Peche wie Kohlenteerpech oder Erdölpech und/oder bevorzugt härtbare Harze wie Phenolharze, Epoxidharze, Polyimide, füllstoffhaltige Mischungen mit Furfurylalkohol oder Furanharze eingesetzt. Die Massen werden hierzu in eine Preßform eingefüllt, wobei in der Form verlorene Kerne vorgesehen werden. Die Kerne nehmen den Raum der später in der Verbundkeramik zu bildenden Hohlräume oder Aussparungen ein.

Im dritten Schritt wird die Form nach dem Befüllen mit Hilfe der Preßstempel mit dem erforderlichen Druck beaufschlagt und die Masse wird zu Grünkörpern mit Hohlräumen und/oder Aussparungen verpreßt.

Im vierten Schritt wird der gepreßte Körper unter Temperatureinwirkung ausgehärtet. Die Härtung kann separat, also nach dem Pressen erfolgen, beispielsweise in einem Ofen. Es ist auch möglich, in einer beheizbaren Presse die Härtung bereits während des Verpressens gleichzeitig mit diesem oder mit einer Verzögerung zu beginnen. Beim Härten in der Form werden weniger Anforderungen an das Zusammenhalten des gepreßten, aber noch ungehärteten Körpers gestellt.

Nach der Härtung wird der verfestigte Grünkörper im fünften Schritt mitsamt dem Thermoplastkern in den C/C-Zustand überführt, das heißt carbonisiert. Dies geschieht im allgemeinen durch Erhitzen unter Schutzgas (Stickstoff) oder im Vakuum auf Temperaturen im Bereich von ca. 750 °C bis 1100 °C. Wird auf Temperaturen oberhalb von ca. 1800 °C erhitzt, findet zusätzlich eine Graphitierung des Kohlenstoffs statt.

Nach der Carbonisierung des Grünkörpers werden gegebenenfalls angefallene Pyrolyse-, beziehungsweise Kohlenstoffreste in den gebildeten Hohlräumen beseitigt und es wird ein poröser C/C-Körper mit Hohlräumen oder Ausnehmungen erhalten, der sich weiterverwerten läßt. Er kann nachbearbeitet oder wiederum zu komplexeren Strukturen zusammengesetzt oder geklebt werden.

In einer bevorzugten Ausführungsform des erfindungsgemäßen Verfahrens wird der Kohlenstoff des C/C-Körpers im sechsten Schritt durch eine Schmelzinfiltration mit Metallen und die gegebenenfalls anschließende Wärmebehandlung zumindest teilweise zu den entsprechenden Carbiden umgesetzt. Bevorzugt ist die Schmelzinfiltration mit Silicium, wobei sich zumindest ein Teil des Kohlenstoffs (bevorzugt der Kohlenstoff in der Matrix) zu Siliciumcarbid umsetzt; die Matrix enthält dann SiC, nicht umgesetzten Kohlenstoff sowie nicht umgesetztes Silicium. Hierzu wird der C/C-Körper mit Siliciumpulver überschichtet und auf Temperaturen von ca. 1500 bis ca. 1800 °C im Vakuum erhitzt. Je nach beabsichtigter Verwendung ist es dabei nicht zwingend notwendig, den gesamten C/C-Körper in C/SiC umzusetzen, im allgemeinen wird aber zumindest die Randschicht zu C/SiC umgesetzt. Obwohl die Siliciumschmelzinfiltration das bevorzugte Verfahren ist, kann der C/C-Körper auch mit anderen üblichen Verfahren unter Ausbildung der in der Verbundwerkstofftechnologie gängigen Matrices nachverdichtet werden. Insbesondere kann das Flüssigsilicierverfahren auch mit Siliciumlegierungen durchgeführt werden, die unter anderem Metalle wie Chrom, Eisen, Kobalt, Nickel, Titan und/oder Molybdän enthalten können.

Das beschriebene Verfahren kann bevorzugt zur Herstellung von Bremsscheiben oder Kupplungsscheiben verwendet werden. Hierbei werden in eine zylindrische Form die preßfähige Masse sowie mindestens ein Kern gefüllt. Die Dicke der Boden- und Deckschicht (unterhalb bzw. oberhalb der Kernzone) beträgt nach dem Verpressen vorzugsweise mindestens 7 mm. Diese Schichten bilden die Reibschichten der Brems- oder Kupplungsscheibe. Die Form der Brems- oder Kupplungsscheibe ist bevorzugt die einer Ringscheibe, d. i. der achsennahe Raum ist durchgehend über die gesamte Dicke der Scheibe leer. Die Form und Anordnung des mindestens einen Kerns ist bevorzugt derart, daß die gebildeten Hohlräume von der Peripherie des zylindrischen Formkörpers bis zum inneren Rand des Formkörpers reichen und damit einen offenen Durchgang zwischen dem inneren und äußeren zylindrischen Rand der Ringscheibe bilden. Hierdurch werden innenbelüftete Brems- oder Kupplungsscheiben mit radialen Lüftungskanälen erzeugt.

Gemäß dem erfindungsgemäßen Verfahren werden Brems- und Kupplungsscheiben zugänglich, bei denen der Volumenanteil der Verstärkungsfasern in der Kernzone und der in den darüber- und darunterliegenden (massiven) Schichten voneinander um nicht mehr als 30 %, bevorzugt um nicht mehr als 20 %, und besonders bevorzugt um nicht mehr als 15 % abweicht. Insbesondere kann eine maximale Abweichung von bis zu 10 % durch geeignete Kombination von Dicke und Kompressibilität des Kerns erreicht werden. Diese Kombination kann für jede Wahl von Preßmasse und Kernmaterial, Kernform und Anzahl und angewandtem Preßdruck durch eine Versuchsserie ermittelt werden. Durch die kompressiblen Kerne läßt sich sogar erreichen, daß der Volumenanteil der Verstärkungsfasern in der Kernzone über dem in den darüber- und darunterliegenden Zonen liegt, bevorzugt kann er zwischen 5 und 30 % über dem Volumenanteil in den angrenzenden Zonen liegen, besonders bevorzugt bis zu 20 % darüber, und insbesondere um bis zu 15 % darüber. Das Verfahren ermöglicht einen kontinuierlichen Übergang zwischen den Zonen mit unterschiedlichem Faseranteil; es wird keine sprunghafte Änderung gefunden, die sich beispielsweise auf der Photographie eines Schnittes oder Schliffes durch eine Linie oder eine Streifen manifestieren würde.

Das erfindungsgemäße Verfahren wird anhand der Abbildungen näher erläutert. Es zeigen:
- Fig. 1: eine perspektivische Aufnahme eines für das erfindungsgemäße Verfahren geeigneten Kerns,
- Fig. 2: eine perspektivische Ansicht desselben Kerns unter einem anderen Blickwinkel,
- Fig. 3: eine Photographie eines drehachsenfern aufgeschnittenen Grünkörpers vor der Carbonisierung, und
- Fig. 4: eine Photographie einer drehachsenfern aufgeschnittenen Bremsscheibe nach der Infiltration mit Silicium.

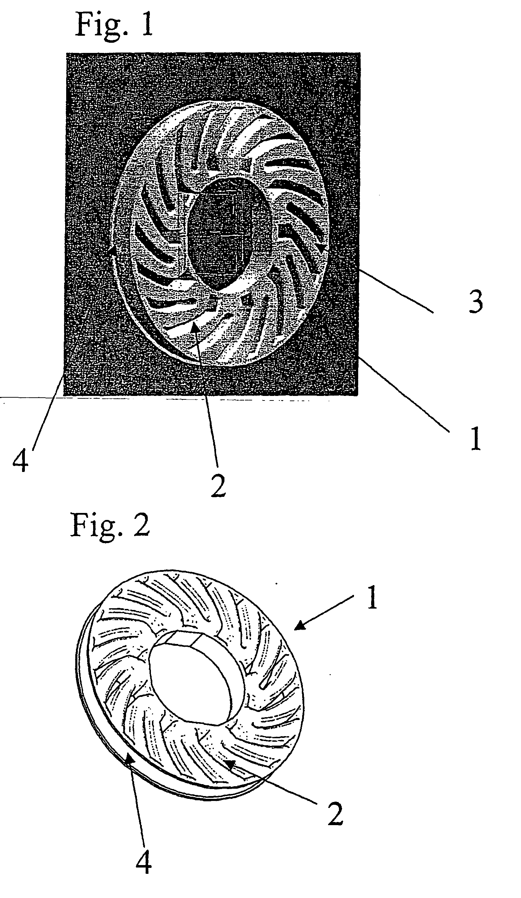

Die Schrägansicht der Fig. 1 zeigt einen Kern **1**, bei dem die Hohlräume **2** sichtbar sind. Im Bereich der Hohlräume **2** wird das Material der Kernzone der Bremsscheibe aus der zwischen den Kernteilen **3** in der Kernzone eingebrachten Masse gebildet. Die Fig. 2 zeigt denselben Kern aus einem anderen Blickwinkel.

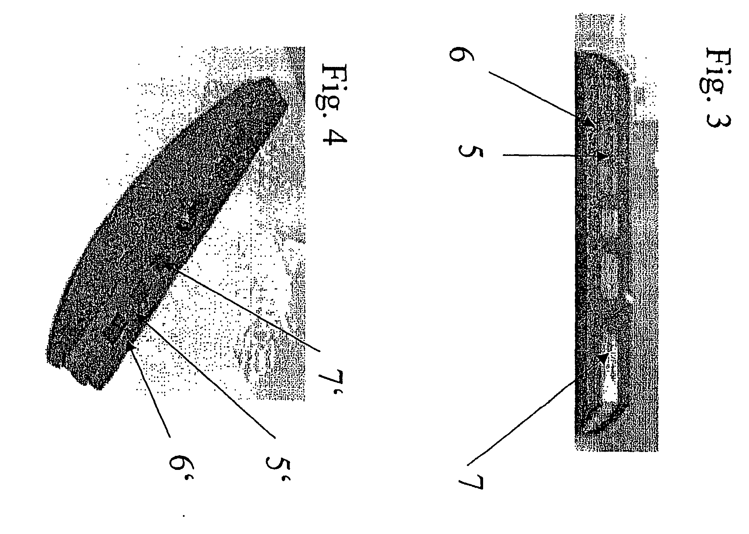

In der Fig. 3 ist ein Schnitt durch den gepreßten und gehärteten Grünkörper nach dem vierten Verfahrensschritt dargestellt; die komprimierten Kerne **7** sind von Stegen **5** der Preßmasse umgeben. Die gleiche Graufärbung des Materials einer unteren Deckschicht **6** wie des Materials in der Kernzone **5'** zeigt an, daß ihre Dichte gleich ist.
In der Fig. 4 ist ein Schnitt durch die fertig silicierten Bremsscheibe nach dem sechsten Verfahrensschritt gezeigt; auch hier ist die Dichte im Bereich einer oberen silicierten Deckschicht **6'** oberhalb der Kernzone **5'** gleich der in der Kernzone **5'**. Die nach dem Pyrolysieren an der Stelle der Kerne gebildeten Hohlräume **7'** entsprechen den Kernen in ihrer Gestalt und Größe.

Die nach dem erfindungsgemäßen Verfahren hergestellten innenbelüfteten Brems- oder Kupplungsscheiben lassen sich für Automobil- und Lastwagenbremsen, für Flugzeuge und Schienenfahrzeuge sowie für Reibungskupplungen in Antrieben aller Art verwenden. So hergestellte Hohlkörper sind ebenfalls als Bauteile im Werkzeug- und Maschinenbau vielseitig verwendbar.

### Bezugszeichenliste

- 1: Kernform
- 2: Hohlraum
- 3: Kernteile
- 4: Peripherie
- 5: Stege
- 5': Kernzone
- 6: untere Deckschicht
- 6': obere silicierte Deckschicht
- 7: Kern
- 7': Hohlraum

## Patentansprüche

1. Verfahren zur Herstellung von Hohlkörpern aus faserverstärkten keramischen Materialien, wobei
- im ersten Schritt kompressible Kerne hergestellt werden, deren Form zumindest in der Ebene senkrecht zur Preßrichtung im wesentlichen der Geometrie der zu bildenden Hohlräume entspricht,
- im zweiten Schritt ein Grünkörper hergestellt wird, indem in eine Form die genannten kompressiblen Kerne und eine preßfähige Bindemittel und Faserstoff enthaltende Masse gefüllt werden,
- im dritten Schritt die faserstoffhaltige Masse verpreßt wird, wobei der Kern zumindest in Preßrichtung um mindestens 5 %, bezogen auf seine Ausgangslänge, komprimiert wird,
- im vierten Schritt die faserstoffhaltige Masse ausgehärtet wird,
- im fünften Schritt der auch als Vorkörper bezeichnete verfestigte Grünkörper durch Erhitzen in einer nicht oxydierenden Atmosphäre auf eine Temperatur von ca. 750 °C bis ca. 1100 °C zu einem C/C-Körper carbonisiert wird,
wobei die Kompressibilität der Kerne unter den Preßbedingungen eine Längenänderung in Preßrichtung um mindestens 5 % zuläßt, und die Kerne aus Material bestehen, das im fünften Schritt pyrolysiert, oder unter Volumenschwindung zumindest teilweise pyrolysiert wird.

2. Verfahren nach Anspruch 1, **dadurch gekennzeichnet, daß** anschließend an den fünften Schritt
- im sechsten Schritt der C/C-Körper unter Erhalt seiner Form mit einem flüssigen Metall infiltriert wird, wobei zumindest teilweise eine Reaktion des Kohlenstoff-Anteils der Matrix des C/C-Körpers mit dem Metall unter Bildung von Carbiden abläuft.

3. Verfahren nach Anspruch 1, **dadurch gekennzeichnet, daß**
- im vierten Schritt die faserstoffhaltige Masse durch Erwärmen auf eine Temperatur von 120 °C bis 280 °C ausgehärtet wird

4. Verfahren nach Anspruch 1, **dadurch gekennzeichnet, daß** der dritte und vierte Schritt gleichzeitig oder zeitlich teilweise überlappend ausgeführt werden.

5. Verfahren nach Anspruch 1, **dadurch gekennzeichnet, daß** mehrschichtige Kerne aus geschäumten Polymeren in sandwichartigen Strukturen eingesetzt werden, wobei mindestens eine der oberen oder unteren Flächen des Kernes durch ein hartes, unter Härtungsbedingungen unschmelzbares Polymer bedeckt wird.

6. Verfahren nach Anspruch 1, **dadurch gekennzeichnet, daß** die preßfähigen Massen Kohlenstoffasern mit mittleren Länge von höchstens 50 mm enthalten.

7. Verfahren nach Anspruch 1, **dadurch gekennzeichnet, daß** die preßfähigen Massen Bündel aus Kohlenstoffasern mit einer mittleren Länge unterhalb von 5 mm enthalten.

8. Verfahren nach Anspruch 2, **dadurch gekennzeichnet, daß** das zur Infiltration verwendete Metall Silicium oder eine Siliciumlegierung ist.

9. Verfahren nach Anspruch 8, **dadurch gekennzeichnet, daß** die Siliciumlegierung ein Metall ausgewählt aus Chrom, Eisen, Nickel, Kobalt, Titan und Molybdän enthält.

## Claims

1. A process for producing hollow bodies comprising fiber-reinforced ceramic materials, which comprises
- in a first step, producing compressible cores whose shape corresponds essentially to the geometry of the hollow spaces to be formed, at least in the plane perpendicular to the pressing direction,
- in a second step, producing a green body by introducing the abovementioned compressible cores and a pressable composition comprising binder and fiber material into a mold,
- in a third step, pressing the fiber-containing composition, with the core being compressed, at least in the pressing direction, by at least 5% compared to its initial length,
- in a fourth step, curing the fiber-containing composition,
- in a fifth step, carbonizing the cured green body, also referred to as intermediate body, by heating to a temperature of from about 750°C to about 1100°C in a nonoxidizing atmosphere to give a C/C body,
where the compressibility of the cores permits, under the pressing conditions, a length change in the pressing direction of at least 5% and the cores comprise material which, in the fifth step, pyrolyzes or is at least partially pyrolyzed with a reduction in volume.

2. The process as claimed in claim 1, wherein, subsequent to the fifth step,
- in a sixth step, the C/C body is infiltrated with a liquid metal while retaining its shape, with at least partial reaction of the carbon in the matrix of the C/C body with the metal occurring to form carbides.

3. The process as claimed in claim 1, wherein
- in the fourth step, the fiber-containing composition is cured by heating to a temperature of from 120°C to 280°C.

4. The process as claimed in claim 1, wherein the third and fourth steps are carried out simultaneously or partly overlapping in time.

5. The process as claimed in claim 1, wherein multilayer cores comprising foamed polymers in sandwich-like structures in which at least one of the upper or lower surfaces of the core is covered by a hard polymer which is infusible under curing conditions are used.

6. The process as claimed in claim 1, wherein the pressable compositions contain carbon fibers having a mean length of not more than 50 mm.

7. The process as claimed in claim 1, wherein the pressable compositions contain bundles of carbon fibers having a mean length of less than 5 mm.

8. The process as claimed in claim 2, wherein the metal used for infiltration is silicon or a silicon alloy.

9. The process as claimed in claim 8, wherein the silicon alloy comprises a metal selected from among chromium, iron, nickel, cobalt, titanium and molybdenum.

## Revendications

1. Procédé de fabrication d'objets creux en matériaux céramiques renforcés par des fibres, dans lequel
- dans une première étape, on fabrique des noyaux compressibles, dont la forme correspond, au moins dans le plan perpendiculaire à la direction de moulage par compression, sensiblement à la géométrie des cavités à former,
- dans une deuxième étape, on fabrique une pièce à l'état vert en remplissant un moule avec les noyaux compressibles cités et une masse moulable par compression contenant un liant et un matériau fibreux,
- dans une troisième étape, on comprime la masse contenant un matériau fibreux, le noyau étant comprimé, au moins dans la direction de moulage par compression, d'au moins 5%, par rapport à sa longueur d'origine,
- dans une quatrième étape, la masse contenant un matériau fibreux est durcie,
- dans une cinquième étape, la pièce à l'état vert durcie désignée également par pièce préformée est carbonisée par chauffage dans une atmosphère non oxydante à une température d'environ 750°C à environ 1100°C pour donner une pièce C/C,
dans lequel la compressibilité des noyaux permet, dans les conditions de moulage par compression, une variation de longueur dans la direction de moulage par compression d'au moins 5% et les noyaux sont constitués d'un matériau qui est pyrolysé à la cinquième étape ou qui est pyrolysé au moins partiellement en diminuant de volume.

2. Procédé selon la revendication 1, **caractérisé en ce que**, après la cinquième étape,
- dans une sixième étape, la pièce C/C est infiltrée en conservant sa forme par un métal liquide, une réaction ayant lieu au moins partiellement entre la fraction de carbone de la matrice de la pièce C/C et le métal, avec formation de carbures.

3. Procédé selon la revendication 1, **caractérisé en ce que**
- dans la quatrième étape, la masse contenant un matériau fibreux est durcie par chauffage à une température de 120°C à 280°C.

4. Procédé selon la revendication 1, **caractérisé en ce que** la troisième et la quatrième étapes sont réalisées en même temps ou en se chevauchant partiellement dans le temps.

5. Procédé selon la revendication 1, **caractérisé en ce que** l'on utilise des noyaux stratifiés en polymères expansés dans des structures en sandwich, dans lequel au moins une des surfaces supérieure ou inférieure du noyau est recouverte par un polymère rigide non fusible dans les conditions de durcissement.

6. Procédé selon la revendication 1, **caractérisé en ce que** les masses moulables par compression contiennent des fibres de carbone ayant une longueur moyenne au maximum de 50 mm.

7. Procédé selon la revendication 1, **caractérisé en ce que** les masses moulables par compression contiennent des faisceaux de fibres de carbone ayant une longueur moyenne inférieure à 5 mm.

8. Procédé selon la revendication 2, **caractérisé en ce que** le métal utilisé pour l'infiltration est le silicium ou un alliage de silicium.

9. Procédé selon la revendication 8, **caractérisé en ce que** l'alliage de silicium contient un métal choisi parmi le chrome, le fer, le nickel, le cobalt, le titane et le molybdène.
